# EUROPEAN PATENT APPLICATION

(11) **EP 1 233 360 A1**
(43) Date of publication of application: **21.08.2002**
(21) Application number: 02075612.8
(22) Date of filing: 15.02.2002
(51) Int. Cl.: G06F 17/60

(54) **Method and system for job mediation**

(30) Priority: 15.02.2001 WO PCT/NL01/00124
(71) Applicant: Hedson B.V., 1100 AP Amsterdam (NL)
(72) Inventor: Noteboom, Benschier Jacob, 1100 AP Amsterdam (NL)
(74) Representative: Jorritsma, Ruurd

(57) **Abstract**

System and method for job mediation, comprising a central processor (2), a memory (3) connected to the central processor (2), and at least one input/output terminal (4; 7) connectable to the central processor (2), in which the central processor means (2) is arranged for storing employee characteristics comprising matching criteria and associated matching criteria values, receiving a request (13) for a number of jobs having the same job characteristics from a customer, the job characteristics comprising values for at least a subset of the matching criteria, matching the employee characteristics with the job characteristics using the matching criteria, outputting a first subset (14) of the employees matching the job characteristics, and generating an adjustment advice (16), comprising an identification of at least one of the matching criteria and an associated value to which the at least one matching criterion should be adjusted.

## Description

The present invention relates to a method and system for job mediation, more specifically for matching a request from a customer for a number of jobs with a plurality of employees seeking employment, especially temporary employment.

It is known in the art of job mediation to store job characteristics of a plurality of jobs in e.g. a database, and to search through the database to find a suitable job for an employee. It is further known to store a number of employee characteristics in a large database and select a specific employee for a specific job request by matching the employee characteristics with the job requirements. Usually, such a match will not often result in the requested number of employees.

The present invention seeks to provide a system and method for job mediation, in which the final result is that both the customer seeking employees for a certain job and the employee seeking employment are best served. I.e., the customer obtains the right number of properly qualifies employees for the requested job, and the employee obtains a job which suits his or her needs.

This is accomplished by a method for job mediation, comprising the steps of storing employee characteristics of a plurality of employees, the employee characteristics comprising a plurality of matching criteria and associated matching criteria values, receiving a request for a number of jobs having the same job characteristics from a customer, the job characteristics comprising values for at least a subset of the plurality of matching criteria, matching the employee characteristics with the job characteristics using the matching criteria, outputting a first subset of the plurality of employees matching the job characteristics, and generating an adjustment advice, comprising an identification of at least one of the plurality of matching criteria and an associated value to which the at least one of the plurality of matching criteria should be adjusted. The present method allows to more effectively mediate jobs, as the adjustment advice will result in a higher number of suitable employees when the adjustment advice is followed. The criteria values may be adjusted by the customer or by the employee.

In an embodiment of the present method, the method comprises the further step of calculating a projected subset of employees when the at least one matching criteria is adjusted to the associated value, and the adjustment advice further comprises the projected subset of employees. Visualising the projected subset of employees will make a decision on which criteria to adjust easier.

In a further embodiment of the present method, the step of generating an adjustment advice is executed when the number of employees in the first subset of employees is lower than the requested number of jobs. This will lessen the computation burden of the present method.

Preferably, the step of matching comprises the steps of determining a score for each of the plurality of employees, based on a weighted score for each of the plurality of matching criteria, the first subset of the plurality of employees comprising employees, for which the score is above a first predetermined threshold, and the adjustment advice is being generated by selecting a second subset of employees, for which the score is between the first predetermined threshold and a second predetermined threshold, the second threshold being lower than the first threshold; and deriving from the second subset at least one matching criterion, for which the employee characteristic and job characteristic do not match, and an associated value that will result in a higher number of the plurality of employees for which the score is above the first threshold. This excludes the set of employees, for which adjustment of matching criteria may never lead to a complete match for the specific job. Also, this embodiment will lessen the computation effort necessary.

In a further embodiment, the at least one criterion is selected from a list of meaningful criteria. Depending on whether a customer with a job request or an employee has issued the adjustment advice, some matching criteria may not be adjustable. It is therefore unnecessary to include these criteria, which may be stored in a knowledge database, in the generation process for an adjustment advice.

To obtain an even better adjustment advice, the at least one matching criterion is a further matching criterion associated with one of the plurality of matching criteria according to a set of knowledge rules. Such a smart adjustment advice comprises a suggestion to interchange a certain criterion for a further associated criterion.

The at least one criterion may be adjustable by one of the plurality of employees or by the customer. An example of a criterion which may be subject of an adjustment advice, is employee availability. When an employee changes his requested working hours on a day from the period of 10 a.m. to 6 p.m. to the period of 9 a.m. to 5 p.m., this may widen the range of possible jobs for that employee.

In a further embodiment, the employee characteristics comprise soft skills, and soft skill criteria values being deduced from an interview with the employee. The interview may be held face-to-face or from a remote place, such as via telephone or the Internet. Soft skills include, but are not limited to reliability, motivation, practical intelligence, initiative, friendliness, co-operation, helpfulness, tidiness, flexibility, adaptability. Including these characteristics in the matching criteria allows the mediation method to be executed even in the case where no physical contact exists between the employee and the job mediator, such as in the case of a job mediation method implemented on the Internet.

In an even further embodiment, the request for a number of employees allows part-time employees, and the employee characteristics of part-time employees comprises the part-time employee available hours. Preferably, the method comprises the further step of matching part-time employees of which the available hours match with the requested hours for at least a first value, e.g. 40%, sorting the part-time employees according to matching availability, and selecting a number of part-time employees according to the sorted list, until the requested hours are filled. This embodiment will allow to meet a customer request to a more sufficient extent when the requested job(s) working hours cannot be completely filled by a single employee.

A further aspect of the present invention relates to a system for job mediation, comprising central processing means, memory means connected to the central processing means, and at least one input/output means connectable to the central processing means, in which the central processing means are arranged to perform the method steps of the present invention.

The present invention will now be explained in more detail using a number of embodiments, with reference to the accompanying drawing in which:
Fig. 1 shows a conceptual context diagram of the mediation method and system according to the present invention;
Fig. 2 shows a schematic diagram of an embodiment of the present job mediation system;
Fig. 3 shows a flow diagram of the present job mediation method according to an embodiment of the present invention; and
Fig. 4 shows a flow diagram of part of the present method for generating a smart adjustment advice.

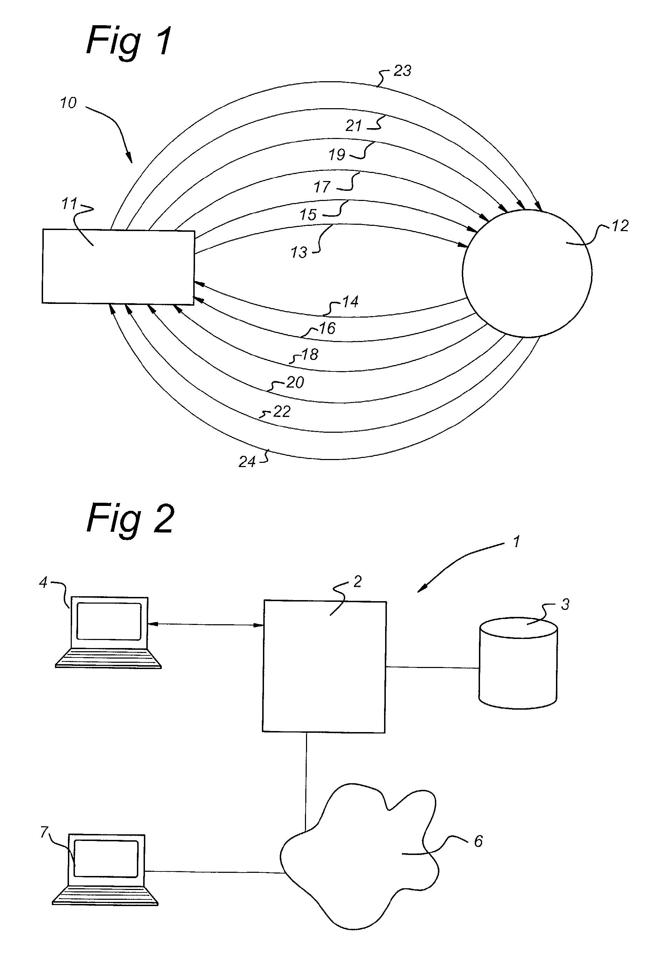

Fig. 1 shows a conceptual context diagram of the mediation method and system 10 according to the present invention. The mediation system 10 comprises a front office module 11, which comprises the interface to the outside world, i.e. the interface with the employee seeking for a job and with the customer seeking employees to fill his requested jobs. The mediation system 10 further comprises a matching module 12, which, as the front office module 11, may e.g. be a software program running on a general purpose computer (not shown). The matching module 12 can be triggered by a number of possible events from the front office module 11. The employee and the mediating company offering the present job mediation as a service may enter into a judicial employment agreement, such that the employee is judicially an employee of the mediating company and not of the customer seeking employees.

Fig. 2 shows a schematic diagram of a job mediation system according to the present invention. The functions of the job mediation method are implemented on a central computer or server 2, which is interfaced to a database or memory means 3. The central computer 2 is interfaced with a general purpose computer or PC 4 for interaction with a user (customer or employee). As an alternative, the user may access the central computer 2 using a general purpose computer 7, which is connectable with the central computer 2 via a network 6, such as the Internet.

The front office,module 11 may issue a request for employees 13. The front office module 11 enables a customer to formulate a request for employees needed for a specific (temporary) job. The number of employees needed and the relevant attributes or matching criteria values (from the customer's perspective) are passed to the matching module 12, which in turn returns a message 14 with the available number of employees and possibly a list with employees. For this, the matching module 12 performs a number of steps, of which one is searching a database with candidate employees to find the available number of employees that match all criteria (at an acceptable level). In his request, the customer may also request a specific employee, which must then of course be included in the result 14 when this specific employee is available.

The front office module 11 may also issue a request for adjustment advice 15. While querying the request for employees, the customer may be interested in an advice on how to adjust the request most efficiently. The matching module 12 normally outputs a list of suitable employees 14, but may alternatively also generate a mismatch list, i.e. a list of criteria sorted on their (negative) impact on the match quality, on which the matching module 12 may base the adjustment advice 16. The functions associated with the generation of the adjustment advice are discussed in more detail below.

Once a customer is satisfied with the results 14 from the request for employees 13, the front office module 11 may generate a request for confirmation 17 in order to book the selected employees. As some time may have passed, the request for employees 13 must again be included in the request for confirmation 17, but this time with the intention to book the returned employees immediately. The request for confirmation 17 comprises the number of employees to be booked and all relevant attributes for matching from the customer's perspective. The matching module 12 returns a message 18 comprising a list of employees sorted on match quality, with the best-fit employee listed first, etc.

From the employees perspective, the front office module 11 also performs a number of functions. The front office module 11 may issue a change of employee profile 19, in order to pass every change of employee data that has impact on matching criteria. Possible changes are implemented using functions create, update and delete. Once the changes have been made, the matching module 12 sends a reply 20 with a return status (e.g., ok or error code).

It is also possible that the front office module 11 sends a request for a list of available jobs 21. This allows an employee to view a list of jobs an employee can expect on basis of his recorded matching criteria values. The request 21 comprises all relevant matching criteria from the employee's perspective. The matching module 12 returns a list 22 with available jobs that fulfil the employee requirements.

When confronted with the resulting list 22, an employee may want to ask for an advice how to change his profile to have more or less jobs to match his requirements. A request 23 for adjustment advice on available jobs may then be generated by the front office module 11, comprising the relevant attributes from the employee's perspective. The matching module 12 may then output a list 24 of match criteria sorted on their negative impact on the match quality.

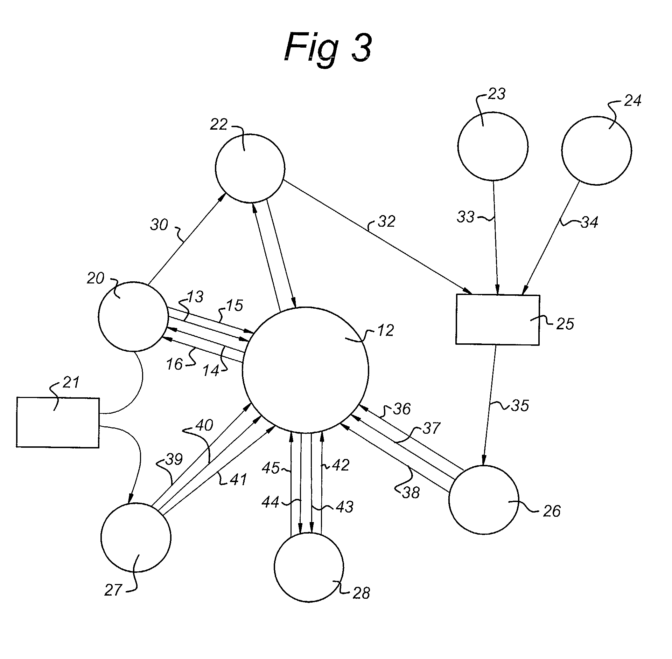

In Fig. 3, a flow diagram is shown of the present job mediation method and system. The processes performed by the front office module 11 are shown in more detail. The 'customer interface' 20 includes all contact moments with customers that precede the actual ordering by the customer. At this stage the customer uses the matching module 12 to fine-tune his job profile stored in a job profile database 21 and/or requests by balancing the matching criteria to get sufficient employees who are best-fit for the job. Also, the customer can request the matching module 12 for an advice on how to adjust the criteria (request 15).

Once a customer is satisfied with the results of a request for employees 13, the request may be transformed into an adjusted request 30, which is sent to the process 'customer ordering' 22. Again the matching module 12 is consulted using the request for confirmation 17, but this time with the aim to inspect if the concerning employees are still available. This customer ordering process 22 controls the transaction which updates the availability of the booked employees in the front office database 25 by means of a signal 32.

The process 'employee contacts' 23 includes all contact moments with possible employees. The first contact moment is the employee intake in which the employee is asked a number of essential attributes, or matching criteria values, of which some are used by the matching module 12 for matching with customer requests. In further contacts, these attributes may be fine-tuned. Updates are sent to the front office database 25 via signal 33.

The process 'customer evaluations' 24 includes all contact moments with the customer after ordering. Relevant information that is gathered during these contacts may be stored in the front office database 25 via signal 34.

A further process depicted in Fig. 2 is the 'employee database replication & synchronisation' 26. The employee part of the front office database 25 that will be used in the matching module 12 is replicated by this process. This process 26 takes care of one-way synchronisation of the front office (master) database 25 and the matching module (slave) database. Furthermore, the process allows recovery of the matching module database out of the front office database 25. For this the signals create 36, update 37 and delete 38 are being used.

A similar process 27 exists for the 'job database replication & synchronisation'. However, in this case, the master database used is the job profile database 21 and signals create 39, update 40 and delete 41 are used to interface with the database part of the matching module 12.

A further process 28 called 'available jobs list & adjusting' is shown, which implements the functions associated with all contact moments with (potential) employees that precede the actual registration of the employee profile in the employee part of the front office database 25. The employee can consult the matching module 12 for a list of available jobs (request 21 and associated list 22) and the employee can request an advice 23 on how to adjust his criteria to get more (or less) available jobs and a bigger likelihood of suitable work.

All inputs of the matching module 12 are accompanied by a number of attributes that are needed for matching. These attributes are part of either the customer's requests (request for employees 13, request for adjustment advise 15 and request for confirmation 17) or the employee's profile (change of employee profile 19, request for available jobs 21, request for adjustment advice on available jobs 23).

The present mediation method may in a further embodiment, give an advice to the customer to increase the requested number of jobs, based on heuristic rules with regard to expected employees that will not show up for the job. This ascertains to a certain degree that the requested number of jobs will be filled by employees actually showing up for the job. The heuristic rules may also be based on actual data from the employees with regard to the reachability of the employee (i.e. the chance that the employee may be contacted with an offer for the job in time).

In a further embodiment, the customer can indicate in his request for employees 13 that part-time employees are allowed. The functionality needed to implement the possibility to include part-timers in the matching module 12 will be discussed next. In practise the time slots of employees and jobs do not match exactly, resulting in a planning in which only a part of the requested hours of a job or an employee are matched. An employee who matches all of the requested hours is called a full-timer, and an employee who matches only a part of the requested hours is called a part-timer. As with matching for full-timers, the capabilities needed to do a certain job are only used as a negative selection criterion. Of course, from all employees suitable for the job, the full-timers are preferred over the part-timers. The order in which part-timers are considered is determined by the decreasing percentage of the job that they can match. Firstly, the matching module 12 will try to fill the customer request with full-timers. When the customer request 13 is not completely satisfied, the matching module 12 will additionally search for employees which are able to fulfil the requested availability demand above a predetermined percentage, e.g. 40%. Further, the matching module 12 sorts the list with part-timers on the decreasing percentage of the job that can be matched by the employee. This step may be repeated with ever decreasing percentages until the job request is fulfilled.

The present job mediation method allows a customer or an employee to request an adjustment advice. An adjustment advice may relate to a single matching criterion adjustment, an adjustment of multiple matching criteria, or an adjustment of related criteria.

In a first embodiment, which is called an improved adjustment advice, one or more matching criteria should be adjusted to obtain a higher score on the number of matching employees for a specific job profile. When the customer has entered the specific job profile, which is stored in the job profile database 21, a request for employees 13 is received by the matching module 12. The matching module 12 returns a list of employees 14, of which the matching score is above a certain, first threshold. When insufficient matches are available, the customer sends a request for adjustment advice 15 to the matching module 12.

The matching module 12 bases its adjustment advice 16 on the employees in the front office database 25 that match with a score below the first threshold, but for which the match score is above a certain, second threshold. However, exceptions may be made, as it might be interesting to also include certain criteria for which the match weight was given as 'never'. This 'never' weight might force the match score below the second threshold, but nevertheless, this employee should also be used to generate the adjustment advice. In the adjustment advice, an indication is given on how many matches there would be when the adjustment advice is followed. This should be based on the entire employee database and on the total match score. The adjustment advice thus comprises a criterion or set of criteria, value(s) and number of matches. An example is shown in the following table.

| advice number | criterion | value | number of matches |
|---|---|---|---|
| 1 | desired education | MBO level | 8 |
| | salary | 20 | |
| 2 | desired education | MBO level | 15 |
| 3 | salary | 20 | 20 |

Only part of the matching criteria stored for every employee in the front office database 25 is used by the matching module 12 for generating an adjustment advice. These adjustable matching criteria comprise reachability of employee, working days/times requested, travel expenses, salary offered, education (or diploma's), various skills, such as driving licence, telephone voice, minimum or maximum length, speaking and reading skills, writing skills, minimal age, working experience.

The mismatch functionality of the matching module 12 may play an important role in the adjustment advice. In every deal the customer request is matched against all counter parties (employees) to establish the best-fit employees. Not all match list entries will have a 100% total match-score, because some criteria are not met. The mismatch functionality analyses the deal of the request and determines which demanded criteria were not met. So the mismatch functionality will show the most common property values demanded by the employees but not offered by the customer (or vice versa), e.g. offering another value for this property. On the other hand the mismatch functionality has to show the property values demanded by the customer but not commonly offered by employees. Based on these results the customer might change his offers or demands. In this description focus is put on demands of the customer, but likewise considerations apply for demands of the employee.

The resulting list of a mismatch call can be sorted. As a sort criterion it is obvious to use the number of additional match list entries. It is important to interpret this number in a unique way. It should be defined as the difference between the number of employees, with a match score above a given limit, in the newly changed request minus the number of employees, with a match score above the same limit, in the old request. Based on this number the mismatch list can be sorted. This implies that the criteria with the largest contribution to the total number of matching employees will be ranked highest and these represent the most effective changes the customer can make. Therefore the ordering in the mismatch criteria is used to generate the adjustment advice in order of effectiveness.

As an alternative, the number of additional matches (the delta) resulting from adjustment of a criterion may be indicated in stead of the total number of matches.

The adjustment advice may be requested by both the customer and by the employee. The criteria evaluated for the adjustment advice should then be adjustable by the customer and employee respectively. In the adjustment advice for the employee, the number of total matches (or additional matches) is replaced by an indication of the additional job identifications resulting from the criterion adjustment.

In addition, an educational advice may be generated, e.g. by the matching module 12. These educational advice may be given to improve performance of the mediation method and system in the future, e.g. by giving the advice that minimally four hours are needed between entering a request and the actual start time of the temporary job.

As an example of an improved adjustment advice, the generation of adjustment advice on availability is illustrated in the following example. When most of the administrative jobs are 9 a.m. to 5 p.m. and the employee wants to work from 10 a.m. to 6 p.m., the employee may be advised to change his requested working hours to 9 a.m. to 5 p.m. Alternatively, the customer could be advised to change the requested working hours to 10 a.m. to 6 p.m.

The availability of an employee is characterised by three matching criteria, i.e. maximum hours per week, maximum hours per day and working days with working times. Two thresholds are defined, the highest threshold or available jobs threshold and an adjustment advice threshold. The employees (or jobs) above the available jobs threshold match very good, and the employees (or jobs) below the adjustment advice threshold are too different to match at all. The matching module 12 generates an optimal pattern (working times), which may be presented to the employees (or customer requiring a certain job) between the adjustment advice threshold and the available jobs threshold. The advice generated by the matching module 12 will also look at the employees (or jobs) above the available jobs threshold, as a shift in required working hours may have an influence on employees originally suitable for the job.

In the following, the smart adjustment advice will be discussed. The front office module 11 enables a customer to formulate a request for employees needed for a specific temporary job. The relevant attributes for matching are passed to the matching module 12. The matching module 12 determines if it is necessary to accompany the list of available employees with an adjustment advice on how to improve the results. If applicable the matching module 12 returns both the available employees and the adjustment advice.

Part of the adjustment advice is done by a mismatch function, covering all improvements that result from changing the value from one unique criterion, as discussed above. Moreover the single criterion (or improved) adjustment advice also gives a calculation of the improvement effects, i.e. if the value of that one criterion is changed what would be the effect on the total number of matching employees. It is important to integrate this improved adjustment advice with the smart adjustment advice for the following reasons. If the improved adjustment advise is sufficient to increase the number of employees no additional adjustment advice is necessary. However, the improved adjustment advice can give advice only on the effects of value changes on existing criteria. The smart adjustment advice directs the attention to semantic interpretations of criteria.

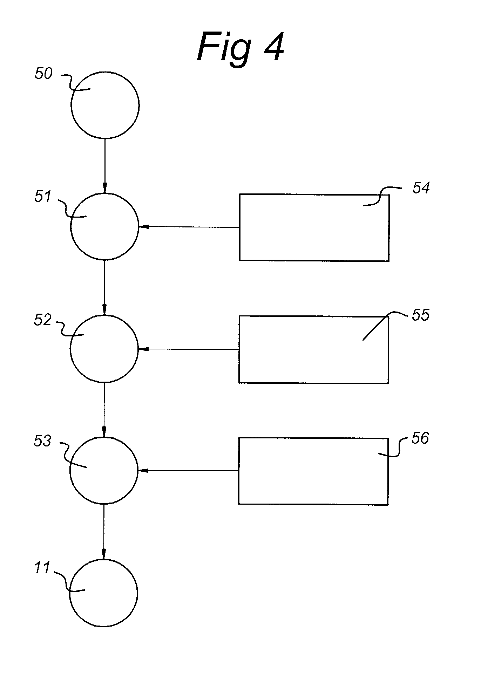

Fig. 4 shows a flow diagram of the job mediation method in the case that not enough employees are found to meet the demand of the customer. The top process 50 has the function to activate the mismatch function. This function has also been described with reference to Fig. 1 and 3 above, in which a request for adjustment advice 15 is sent to the matching module 12. The match module 12 replies with a list of criteria that improve the number of employees that match the request from the customer together with the desirable value for that criterion and the number of additional employees that result from such a change. The number is used to sort the mismatch list (higher number of additional employees first).

The match results and the mismatch list is forwarded to the next process 51, which assesses whether a match is necessary. For this it uses knowledge residing in the store 'advice generation criteria' 54. An adjustment advice is only relevant in cases where an insufficient number of employees are available. A simple (improved) advice concerning adjustment of a single criterion is generated when the number of requested employees minus the number of available employees is larger than a certain threshold value (the default value being 0, but may be higher, e.g. 5 %). A smart adjustment advice is generated when the number of requested employees minus the number of available employees plus the maximum of possible influences from adjustments is larger than the threshold value.

Once it is established that an adjustment advice should be generated in process 51, a signal is forwarded to the next process 52, in which irrelevant criteria are removed from the mismatch list. This process uses further knowledge in a store with meaningful criteria 54. This store 54 comprises a list with criteria which can not be influenced by the customer (or employee), such as customer identification, work duration, hours per day/week, travel duration, kind of work, working environment, or soft skills. Soft skills include, but are not limited to reliability, motivation, practical intelligence, initiative, friendliness, co-operation, helpfulness, tidiness, flexibility, adaptability, and may be obtained from a personal interview with an employee, but alternatively from a non-personal interview with the employee, e.g. by means of a list of questions presented to the employee via the Internet. These criteria are filtered from the mismatch list, and the result is transferred to the next process.

This process 53 has the function of generating a relevant advice, based on the (filtered) criteria of the mismatch list. The mismatch list comprises a list of influencable criteria, and the effect of a possible adjustment of a criterion. This process 53 uses these data and a set of knowledge rules to generate a smart adjustment advice. The knowledge rules, stored in store 56 'adjustment advice knowledge', comprise semantic associations that exist. The customer may be suggested to change a request using other criteria in order to improve the obtained result. As an example, the criterion 'various skills = storage room work' may be interchanged for 'working experience = storage room clerk'. The reverse association may also be used, e.g. changing 'working experience = data typist' may be interchanged for 'various skills = numerical data entry or alphanumeric data entry '. Further examples include: change 'education = MEAO' by 'working experience = administrative worker or administrative assistant' or change 'working experience = nursing assistant' by 'education = middle education health care'. Also, some various skills values may be interchanged by other related various skills that are related (e.g. demanded telephone exchange 25 lines may be weakened to telephone exchange less than 10 lines).

The smart adjustment advice may also relate to a single criterion which has multiple attributes, such as the availability criterion. An advice may be directed at a change of working time while maintaining requested days, or a change of working days while maintaining the number of days per week.

The process 53 'generate relevant advice' outputs a two-part list, the first part being a list of criteria, criteria values and effect of change, and the second part a list with original criteria and suggested criteria. For the second part, no effect is calculated to optimise the performance. When the customer has changed his job profile, by changing a criterion to a suggested other criterion, the complete process as described above may be repeated. Depending on the number of suggestions in the smart advice, this may take several times.

Finally, the result of process 53 (i.e. the improved adjustment advice, smart adjustment advice or a combination of both) is transferred to the front office module 11, which presents the result to the customer.

## Claims

1. Method for job mediation, comprising the steps of
storing employee characteristics of a plurality of employees, the employee characteristics comprising a plurality of matching criteria and associated matching criteria values;
receiving a request (13) for a number of jobs having the same job characteristics from a customer, the job characteristics comprising values for at least a subset of the plurality of matching criteria;
matching the employee characteristics with the job characteristics using the matching criteria;
outputting a first subset (14) of the plurality of employees matching the job characteristics;
and
generating an adjustment advice (16), comprising an identification of at least one of the plurality of matching criteria and an associated value to which the at least one of the plurality of matching criteria should be adjusted.

2. Method according to claim 1, in which the method comprises the further step of calculating a projected subset of employees when the at least one matching criteria is adjusted to the associated value, and
the adjustment advice (16) further comprises the projected subset of employees.

3. Method according to claim 1 or 2, in which the step of generating an adjustment advice (16) is executed when the number of employees in the first subset of employees is lower than the requested number of jobs.

4. Method according claim 1, 2 or 3, in which the step of matching comprises the steps of
determining a score for each of the plurality of employees, based on a weighted score for each of the plurality of matching criteria,
the first subset of the plurality of employees comprising employees, for which the score is above a first predetermined threshold; and
the adjustment advice (16) is being generated by selecting a second subset of employees, for which the score is between the first predetermined threshold and a second predetermined threshold, the second threshold being lower than the first threshold; and
deriving from the second subset at least one matching criterion, for which the employee characteristic and job characteristic do not match, and an associated value that will result in a higher number of the plurality of employees for which the score is above the first threshold.

5. Method according to one of the proceeding claims, in which the at least one criterion is selected from a list of meaningful criteria.

6. Method according to one of the proceeding claims, in which the at least one matching criterion is a further matching criterion associated with one of the plurality of matching criteria according to a set of knowledge rules.

7. Method according to one of the proceeding claims, in which the at least one criterion is adjustable by one of the plurality of employees.

8. Method according to one of the claims 1 through 6, in which the at least one criterion is adjustable by the customer.

9. Method according to claim 7 or 8, in which the at least one matching criteria is employee availability.

10. Method according to one of the proceeding claims, in which the employee characteristics comprise soft skills, and soft skill criteria values being deduced from an interview with the employee.

11. Method according to one of the proceeding claims, in which the request (13) for a number of employees allows part-time employees, and
the employee characteristics of part-time employees comprises the part-time employee available hours.

12. Method according to claim 11, in which the method comprises the further step of matching part-time employees of which the available hours match with the requested hours for at least a first value, e.g. 40%;
sorting the part-time employees according to matching availability; and
selecting a number of part-time employees according to the sorted list, until the requested hours are filled.

13. System for job mediation, comprising central processing means (2), memory means (3) connected to the central processing means (2), and at least one input/output means (4; 7) connectable to the central processing means (2), in which the central processing means (2) are arranged to perform the method steps of one of the claims 1 through 12.
